(19) Europäisches Patentamt
European Patent Office
Office européen des brevets

(11) EP 1 318 181 B1

(12) EUROPEAN PATENT SPECIFICATION

(45) Date of publication and mention of the grant of the patent:
**09.07.2008 Bulletin 2008/28**

(51) Int Cl.:
***C09J 133/00*** *(2006.01)* ***C09J 131/02*** *(2006.01)*
***C08F 218/10*** *(2006.01)*

(21) Application number: **01204789.0**

(22) Date of filing: **07.12.2001**

(54) **Hot melt acrylic pressure sensitive adhesive and use thereof**

Acrylischer druckempfindlicher Schmelzklebstoff und seine Verwendung

Adhesif acrylique thermofusible autocollant et son utilisation

(84) Designated Contracting States:
**AT BE CH CY DE DK ES FI FR GB GR IE IT LI LU MC NL PT SE TR**

(43) Date of publication of application:
**11.06.2003 Bulletin 2003/24**

(73) Proprietor: **3M Innovative Properties Company**
**St. Paul,**
**Minnesota 55133-3427 (US)**

(72) Inventors:
- **Eckstein, Axel**
**c/o 3M Europe s.a.**
**1831 Diegem (BE)**
- **Moonen, Eric**
**c/o 3M Europe s.a.**
**1831 Diegem (BE)**

(74) Representative: **Voortmans, Gilbert J.L. et al**
**3M Europe S.A./N.V.**
**Hermeslaan 7**
**1831 Diegem (BE)**

(56) References cited:
**EP-A- 0 547 507** **EP-A- 0 841 351**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 318 181 B1

## Description

1. Field

The present invention relates to a hot melt acrylic pressure sensitive adhesive and in particular the use thereof to adhere an object, such as for example a sheet material, to low surface energy substrates. The invention further relates to a method of making the hot melt acrylic pressure sensitive adhesive and to a method of making an adhesive article, in particular an adhesive tape or graphics film.

2. Background

Pressure sensitive adhesives are adhesives that with application of pressure adhere to a substrate. Several types of pressure sensitive adhesives are known and include acrylic adhesives. Acrylic adhesives are adhesives that are based on a homo- or copolymer of alkyl ester of acrylic or methacrylic acid. Acrylic adhesives have found wide utility including for example in adhesive tapes such as office tape or as adhesive for sticking graphic films to motor vehicles such as cars, buses, trains and metros for providing advertisement thereon. Acrylic adhesives are particularly suitable for sticking objects such as sheet material, to a high surface energy substrate. Acrylic adhesives are generally less suitable and often do not provide the desired adhesive strength when the substrate has a low surface energy. Low surface energy substrates are substrates that have a surface energy less than 40mN/m and that often may have a surface energy of less than 35mN/m. Examples of such substrates include polyolefin substrates such as for example polyethylene.

Recently, developments in painting of substrates such as painting of plastic or metal substrates used in the manufacturing of cars, trucks, buses, trams, metros and trains has lead to a decreased surface energy of these painted substrates. As a result, sticking of graphic film to these substrates using acrylic based adhesive has become troublesome and attempts have been made to develop new adhesive formulations to improve adhesion to such low surface energy substrates. Unfortunately, some of these developed adhesive formulations are more expensive than acrylic based adhesives. Attempts have also been made to improve the adhesion of acrylic based adhesives to low surface energy substrates. For example, WO 96/05248 discloses a tackified emulsion pressure sensitive adhesive which is said to adhere well to low surface energy substrates such as polyolefins. The adhesive of this publication is based on an emulsion polymer formed from a monomer mix comprising 35 to 60% by weight of alkylacrylates, 15 to 35% by weight of vinyl esters, 15 to 35% by weight of diesters of dicarboxylic acids and upto 5% by weight of unsaturated carboxylic acids. As a preferred vinyl ester, vinyl acetate is mentioned. This adhesive formulation may still not provide the desired adhesive level to low surface energy substrates, and in particular not to the aforementioned painted substrates. Moreover, the adhesive formulation is water based which may not always be desirable.

A solvent based acrylic pressure sensitive adhesive is taught in US 3,654,213 and is said to be capable of adhering to various substrates without mention however of the nature of these substrates. The acrylic adhesive of this US patent is based on a copolymer of an alkyl acrylate and vinyl ester derived from a tertiary alkanoic acid. It is taught that the use of this vinyl ester comonomer achieves compatibility of the adhesive polymer with liquid aliphatic hydrocarbons. The use of solvent in the adhesive formulation provides an environmental disadvantage.

US 5,804,610 describes a method of producing a hot melt acrylic adhesive whereby the monomers for making the adhesive polymer are packaged in a thermoplastic material together with an initiator and chain transfer agents. The packaging is substantially free of solvents or water. Upon exposure to for example UV light, the monomers are caused to polymerize thereby forming the adhesive polymer. The so obtained packaged adhesive polymer can be extruded together with the packaging material to form a hot melt acrylic adhesive layer on a substrate.
The advantage of this adhesive is that it is free of solvent and water. Unfortunately, the adhesive compositions exemplified don't adhere well to low surface energy substrates. Moreover, gels form in the obtained adhesive compositions exemplified in this patent with the result that it may be difficult to obtain a uniform adhesive layer upon extrusion of the adhesive composition.

It is thus a desire to find hot melt acrylic pressure sensitive adhesives that can be used to adhere to low surface energy substrates. Desirably, such hot melt acrylic pressure sensitive adhesive composition is convenient to manufacture and of low cost. Furthermore, it would be desirable to find hot melt acrylic pressure sensitive adhesive formulations that are free of or have a reduced amount of gels.

3. Summary

In one aspect, the present invention provides a hot melt acrylic pressure sensitive adhesive comprising an acrylic polymer having units derived from one or more $C_1$-$C_{20}$ alkyl esters of acrylic or methacrylic acid and units derived from one or more vinyl esters corresponding to the formula:

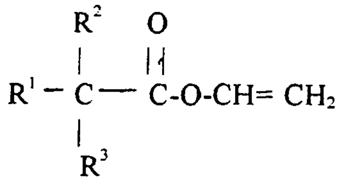

(I)

wherein $R^1$, $R^2$ and $R^3$ each independently represent an alkyl group and the total number of carbon atoms in the vinyl ester is from 7 to 18.

It has been found that due to the presence of the vinyl esters of the above formula (I), acrylic hot melt adhesives can be obtained that adhere well to low surface energy substrates, i.e. substrates that have a surface that has a surface tension of not more than 40 mN/m, in particular a surface tension of not more than 35 mN/m. Vinyl ester comonomers of the formula (I) above, when present in the polymer have also been found to reduce or eliminate the presence of gels in the hot melt acrylic adhesives and accordingly, more uniform adhesive layers can be extruded with such a hot melt acrylic adhesive.

In a second aspect, the invention provides a particularly preferred hot melt acrylic adhesive composition, which is substantially free of organic solvent and water and which adhesive composition comprises an acrylic polymer having between 0.5 and 10% by weight of units derived from acrylic and/or methacrylic acid, between 10 and 70% by weight of units derived from one or more vinyl esters according to formula (I) defined above, between 30 and 90% by weight of units derived from one or more $C_1$-$C_{20}$ alkyl esters of acrylic or methacrylic acid and between 0 and 20% by weight of units derived from optional further comonomers. By the term substantially free of organic solvent and water is meant that the composition is free of organic solvent and water or contains organic solvent or water only in minor amounts, for example in an amount of not more than 10% by weight, preferably not more than 5% by weight, most preferably not more than 1% by weight.

In a third aspect, the present invention provides a method of making an adhesive article comprising the steps of melt extruding an adhesive composition according to the second aspect of the invention on a substrate to form a pressure sensitive adhesive layer thereon.

In a fourth aspect, the present invention relates to of making an adhesive composition according to the second aspect of the invention comprising the steps of

(a) providing a pre-adhesive composition that comprises (i) a monomer mixture consisting of 0.5 to 10% by weight of acrylic and/or methacrylic acid, between 10 and 70% by weight of one or more vinyl esters according to formula (I) defined above, between 30 and 90% by weight of one or more $C_1$-$C_{20}$ alkyl esters of acrylic or methacrylic acid and between 0 and 20% by weight of optional further comonomers, (ii) optionally one or more free radical initiators and (iii) optionally one or more chain transfer agents;
(b) and polymerizing said pre-adhesive composition by exposing said pre-adhesive composition to heat and/or actinic radiation.

In a fifth aspect, the present invention provides a pre-adhesive composition that comprises (i) a monomer mixture consisting of 0.5 to 10% by weight of acrylic and/or methacrylic acid, between 10 and 70% by weight of one or more vinyl esters according to formula (I) defined above, between 30 and 90% by weight of one or more $C_1$-$C_{20}$ alkyl esters of acrylic or methacrylic acid and between 0 and 20% by weight of optional further comonomers, (ii) optionally one or more free radical initiators and (iii) optionally one or more chain transfer agents.

In a preferred embodiment of the present invention, the above defined adhesive composition and pre-adhesive composition, is combined with a packaging material. The term 'combined with a packaging material' includes embodiments in which the adhesive composition or pre-adhesive composition is provided on a sheet or web of packaging material as well as embodiments in which the composition is substantially or completely surrounded by the packaging material. Particularly suitable and desired packaging material includes a thermoplastic material that when extruded together with the adhesive composition, whereby it is mixed therewith, does not destroy the adhesive properties of the adhesive composition and preferably does not substantially adversely affects desired adhesive properties.

4. Detailed description

The hot melt acrylic pressure sensitive adhesive (PSA) for use with this invention is based on an acrylic polymer that includes repeating units derived from one or more vinyl esters corresponding to the formula:

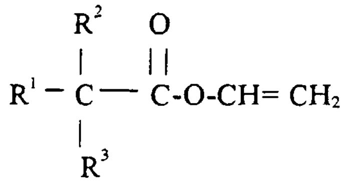

(I)

wherein $R^1$, $R^2$ and $R^3$ each independently represent an alkyl group and the total number of carbon atoms in the vinyl ester is from 7 to 18. Preferably, at least one of the alkyl groups is a methyl group. Examples of vinyl esters of formula (I) include vinyl esters derived from neopentanoic acid, neohexanoic acid, neononanoic acid, neodecanoic acid, neoundecanoic acid. Commercially available vinyl esters of formula (I) include the vinyl versitates available from Resolution Performance Products (Rotterdam, The Netherlands) under the brand name VeoVa™ including VeoVa™ 9, VeoVa™ 10 and Veova™ 11. To optimize the properties of the adhesive composition, it will generally be preferred to use a mixture of two or more vinyl esters of formula (I) such as for example a combination of VeoVa™ 9 and VeoVa™ 10, a combination of VeoVa™ 10 and VeoVa™ 11, a combination of VeoVa™ 9 and VeoVa™ 11 and a combination of VeoVa™ 9, VeoVa™ 10 and VeoVa™ 11.

The amounts of units deriving from the vinyl ester of formula (I) can vary widely but is typically at least 5% by weight and preferably at least 10% by weight. A preferred range of the amount of units deriving from the vinyl ester of formula (I) is between 10 and 70% by weight of the total weight of the acrylic polymer.

The acrylic polymer of the PSA further includes units deriving from one or more alkyl esters of acrylic or methacrylic acid. The alkyl group of these esters may be linear or branched and includes from 1 to 20 carbon atoms, preferably form 3 to 18 carbon atoms. Typically, the alkyl esters of acrylic or methacylic acid are those that derive from non-tertiary alkyl alcohols. Suitable acrylate monomers include methyl acrylate, ethyl acrylate, n-butyl acrylate, lauryl acrylate, 2-ethylhexyl acrylate, cyclohexyl acrylate, iso-octyl acrylate, octadecyl acrylate, nonyl acrylate, decyl acrylate, isobornyl acrylate, and dodecyl acrylate. The corresponding methacrylates of the aforementioned acrylate monomers can be used as well. The amount of units deriving from the alkyl esters of acrylic or methacrylic acid in the acrylic polymer is typically at least 20% by weight, preferably at least 30% by weight, a preferred range being from 30 or 40% by weight to 90% by weight.

The acrylic polymer of the PSA may contain units deriving from further monomers. In particular, the acrylic polymer will generally contain a polar co-monomer including ionic and non-ionic polar monomers. Examples thereof include acrylic acid, methacrylic acid, itaconic acid, beta-carboxyethylacrylate, including salts of these acids; acrylamide, methacrylamide, substituted acrylamides such as N,N-dimethyl acrylamide and N,N-diethylacrylamide, acrylonitrile, methacrylonitrile, vinyl acetate, N-vinyl pyrrolidone, N-vinylcaprolactam and N,N-dimethyl aminoethyl (meth)acrylate.

A particularly preferred acrylic polymer is a polymer that has between 0.5 and 10% by weight of units derived from acrylic and/or methacrylic acid, between 10 and 70% by weight of units derived from one or more vinyl esters according to formula (I), between 30 and 90% by weight of units derived from one or more $C_1$-$C_{20}$ alkyl esters of acrylic or methacrylic acid and between 0 and 20% by weight of units derived from optional further comonomers.

The PSA composition for use in this invention can be prepared from a polymerization, in particular a free radical polymerization, of a pre-adhesive composition that comprises one or more vinyl ester monomers of formula (I) and one or more alkyl esters of acrylic or methacrylic acid as well as any further monomers that may be desired as described above. The pre-adhesive composition typically includes also a free radical initiator that is capable of initiating a free radical polymerization upon exposure to heat or actinic radiation or a combination thereof.

In a particular embodiment, the pre-adhesive composition is combined with a packaging material. Typically, the packaging material will be selected such that it is thermoplastic and does not destroy desired adhesive properties of the PSA when mixed and extruded therewith. The desired adhesive properties are determined by the user and type of application and may include for example peel strength and shear strength. In one preferred embodiment, the pre-adhesive composition is completely surrounded by the packaging material. Preferably, from 0.1 to 500 g of pre-adhesive composition is completely surrounded by the packaging material. In another preferred embodiment, from 3 to 100 g of pre-adhesive composition is completely surrounded by the packaging material. In yet another embodiment, the pre-adhesive composition is disposed on the surface of a sheet, or between a pair of two substantially parallel sheets of packaging material. In another embodiment of the invention, the pre-adhesive composition is substantially or completely surrounded by a hollow profile of packaging material with a length:square root of the cross-sectional area ratio of at least 30:1.

The packaging material preferably melts at or below the processing temperature of the adhesive (i.e., the temperature at which the adhesive flows). The packaging material preferably has a melting point of 200° C or less,

preferably 170° C or less. In a preferred embodiment the melting point ranges from 90° C to 150°C The packaging material may be a flexible thermoplastic polymeric film. The packaging material is preferably selected from ethylene-vinyl acetate, ethylene-acrylic acid, polypropylene, polyethylene, polybutadiene, or ionomeric films. In a preferred embodiment the packaging material is an ethylene-acrylic acid or ethylene-vinyl acetate film.

In the practice of the invention, films ranging in thickness from about 0.01 mm to about 0.25 mm may be used. The thicknesses preferably range from about 0.025 mm to about 0.127 mm to obtain films that have good strength during processing while being thin enough to heat seal quickly and minimize the amount of film material used.

The amount of packaging material depends upon the type of material and the desired end properties. The amount of packaging material typically ranges from about 0.5 percent to about 20 percent of the total weight of the pre-adhesive composition and the packaging material. Preferably, the packaging material is between 2 percent and 15 percent by weight, and more preferably between 3 percent and 5 percent. Such packaging materials may contain plasticizers, stabilizers, dyes, perfumes, fillers, slip agents, antiblock agents, flame retardants, anti-static agents, microwave susceptors, thermally conductive particles, electrically conductive particles, and/or other materials to increase the flexibility, handleability, visibility, or other useful property of the film, as long as they do not adversely affect the desired properties of the adhesive. The packaging material should be appropriate for the polymerization method used. For example, with photopolymerization, when it is desired to irradiate through the packaging material, it is necessary to use a film material that is sufficiently transparent to ultraviolet radiation at the wavelengths necessary to effect polymerization.

The pre-adhesive composition preferably has a melting point of 40°C or less, more preferably 25° C or less. In a preferred embodiment, the melting point of the pre-adhesive composition is 0° C or less. The pre-adhesive composition preferably has a viscosity at 25° C of less than 50,000 centipoise, more preferably 5,000 centipoise.

A small amount of volatile, non-polymerizable solvent may be included in the pre-adhesive composition to dissolve other additives, such as a crosslinking agent. The pre-adhesive composition preferably contains less than 10 weight percent of solvent. In a preferred embodiment, the pre-adhesive composition contains less than 5 weight percent of solvent, and in another preferred embodiment, the pre-adhesive composition contains less than 1 weight percent of solvent. In a preferred embodiment, the pre-adhesive composition is essentially free of solvent.

Typically, the pre-adhesive composition may include an appropriate initiator. For polymerization by ultraviolet light, a photoinitiator is generally included. Useful photoinitiators include substituted acetophenones such as benzyl dimethyl ketal and 1-hydroxycyclohexyl phenyl ketone, substituted alpha-ketols such as 2-methyl-2-hydroxypropiophenone, benzoin ethers such as benzoin methyl ether, benzoin isopropyl ether, substituted benzoin ethers such as anisoin methyl ether, aromatic sulfonyl chlorides, and photoactive oximes. The photoinitiator may be used in an amount from about 0.001 to about 5.0 parts by weight per 100 parts of total monomer, preferably from about 0.01 to about 5.0 parts by weight per 100 parts of total monomer, and more preferably in an amount from 0.1 to 0.5 parts by weight per 100 parts of total monomer.

For thermal polymerization, a thermal initiator is typically included. Thermal initiators useful in the present invention include, but are not limited to azo, peroxide, persulfate, and redox initiators.

Suitable azo initiators include, but are not limited to, 2,2'-azobis(2,4-dimethylvaleronitrile) (VAZO™ 52); 2,2'-azobis(isobutyronitrile) (VAZO™ 64); 2,2'-azobis-2-methylbutyronitrile (VAZO™ 67); and (1,1'-azobis(1-cyclohexanecarbonitrile) (VAZO™ 88), all of which are available from DuPont Chemicals, and 2,2'-azobis(methyl isobutyrate) (V-601) and 2,2'-azobis(2-amidinopropane) dihydrochloride (V-50) available from Wako Chemicals. Also suitable is 2,2'-azobis (4-methoxy-2,4-dimethylvaleronitrile), formerly available from DuPont Chemicals as VAZO™ 33.

Suitable peroxide initiators include, but are not limited to, benzoyl peroxide, acetyl peroxide, lauroyl peroxide, decanoyl peroxide, dicetyl peroxydicarbonate, di(4-t-butylcyclohexyl) peroxydicarbonate (PERKADOX™ 16S, available from AKZO Chemicals), di(2-ethylhexyl) peroxydicarbonate, t-butylperoxypivalate (Lupersol™ 11, available from Atochem), t-butylperoxy-2-ethylhexanoate (Trigonox™ 21-C50, available from Akzo Chemicals, Inc.), and dicumyl peroxide.

Suitable persulfate initiators include, but are not limited to, potassium persulfate, sodium persulfate, and ammonium persulfate.

Suitable redox (oxidation-reduction) initiators include, but are not limited to, combinations of the above persulfate initiators with reducing agents such as sodium metabisulfite and sodium bisulfite; systems based on organic peroxides and tertiary amines (for example, benzoyl peroxide plus dimethylaniline); and systems based on organic hydroperoxides and transition metals, for example, cumene hydroperoxide plus cobalt naphthenate.

Other initiators include, but are not limited to pinacols, such as tetraphenyl 1,1,2,2-ethanediol.

The thermal initiator may be used in an amount from about 0.01 to about 5.0 parts by weight per 100 parts of total monomer, preferably from 0.025 to 2 weight percent.

A combination of thermal and photoinitiation may also be used to prepare compositions according to the invention. For example, the pre-adhesive composition may be polymerized, e.g., in a reactive extruder, to a certain conversion using a thermal initiator, the resulting composition (still in a pre-adhesive state) combined with packaging material (e.g., in the form of a pouch or shell) and a photoinitiator, and the polymerization completed upon exposure to ultraviolet radiation. Conversely, the initial polymerization may be initiated by a photoinitiator, and the polymerization

subsequently completed using a thermal initiator. The thermal and photoinitiator may also be used together, rather than being added sequentially.

Preferably, the composition also includes a chain transfer agent to control the molecular weight of the polymer. Chain transfer agents are materials which regulate free radical polymerization and are generally known in the art. Suitable chain transfer agents include halogenated hydrocarbons such as carbon tetrabromide; sulfur compounds such as lauryl mercaptan, butyl mercaptan, ethanethiol, isooctylthioglycolate (IOTG), 2-ethylhexyl thioglycolate, 2-ethylhexyl mercaptopropionate, 2-mercaptoimidazole, and 2-mercaptoethyl ether; and solvents such as ethanol, isopropanol, and ethyl acetate.

The amount of chain transfer agent that is useful depends upon the desired molecular weight and the type of chain transfer agent. Solvents are useful as chain transfer agents, but they generally are not as active as, for example, the sulfur compounds. The chain transfer agent is typically used in amounts from about 0.001 part to about 10 parts by weight per 100 parts of total monomer, and preferably from about 0.01 part to about 0.5 part, and most preferably from about 0.02 part to about 0.20 part.

A preferred pre-adhesive composition comprises:

(i) a monomer mixture consisting of 0.5 to 10% by weight of acrylic and/or methacrylic acid, between 10 and 70% by weight of one or more vinyl esters according to formula (I) defined above, between 30 and 90% by weight of one or more $C_1$-$C_{20}$ alkyl esters of acrylic or methacrylic acid and between 0 and 20% by weight of optional further comonomers;
(ii) optionally one or more free radical initiators; and
(iii) optionally one or more chain transfer agents.

The pre-adhesive composition may further comprise an effective amount of a crosslinking agent that may be activated after the adhesive has been hot melt coated. Typically, the amount ranges from about 0.01 to about 5.0 parts based upon 100 parts of component (i). The crosslinking agent can be added to the polymerized adhesive before or during hot melt extrusion, or it can be added to the pre-adhesive composition. When added to the pre-adhesive composition, the crosslinking agent can remain intact as a separate species in the adhesive, or it can be copolymerized with the monomers. Crosslinking is preferably initiated after hot melt coating, and the crosslinking is preferably initiated by ultraviolet radiation, or ionizing radiation such as gamma radiation or electron beam (the use of separate crosslinking agents being optional in the case of ionizing radiation). Preferred crosslinking agents that can be added after polymerization and before hot melt coating include multi-functional acrylates such as 1,6-hexanedioldiacrylate and trimethylolpropane triacrylate, and substituted triazines such as 2,4-bis(trichloromethyl)-6-(4-methoxyphenyl)-s-triazine and 2,4-bis(trichloromethyl)-6-(3,4-dimethoxyphenyl)-s-triazine, as described in U.S. Pat. Nos. 4,329,384 (Vesley et al.) and 4,330,590 (Vesley). Another class of preferred crosslinking agents are the copolymerizable mono-ethylenically unsaturated aromatic ketone comonomers free of ortho-aromatic hydroxyl groups such as those disclosed in U.S. Pat. No. 4,737,559 (Kellen et al.). Specific examples include para-acryloxybenzophenone, para-acryloxyethoxybenzophenone, para-N-(methylacryloxyethyl)-carbamoylethoxybenzophenone, para-acryloxyacetophenone, ortho-acrylamidoacetophenone, acrylated anthraquinones, and the like.

Yet another suitable crosslinking agent is 1,5-bis(4-benzoylbenzoxy) pentane. Also suitable are hydrogen-abstracting carbonyls such as anthraquinone, benzophenone, and derivatives thereof, as disclosed in Martens et al., U.S. Pat. No. 4,181,752, hereby incorporated by reference.

The acrylate copolymers can be crosslinked by exposure to ultraviolet radiation from, for example, medium pressure mercury arc lamps. It is preferred that crosslinking agents activated by ultraviolet radiation be primarily activated by a different wavelength of energy than that used for the polymerization. For example, low intensity black lights may be used for polymerization and mercury arc lamps may be used for the subsequent crosslinking.

The pre-adhesive composition can further include tackifying resins to increase the tack of the adhesive. The tackifying resins can also be added during the hot melt coating step. Suitable tackifying resins include rosin esters, terpenes, phenols, and aliphatic, aromatic, or mixtures of aliphatic and aromatic synthetic hydrocarbon pure monomer resins. Examples of useful tackifying resins that are commercially available include Foral™85 and hydrocarbon resins sold under the Regalite™ tradename by Eastman Chemical Company (Kingsport, TN/USA), and SP553 terpene phenolic resin available from Schenectady International, Inc. If used, the amount of tackifying resin can range from about 1 part to about 50 parts by weight per 100 parts of total monomer.

In some cases, polymers may be dissolved in the monomers before polymerization to modify the adhesive characteristics, or to make a syrup or monomeric mixture. Examples of such polymers include silicone pressure sensitive adhesives, acrylic polymers and copolymers, ethylene-vinyl acetate copolymers, acrylonitrile copolymers, and co-polymerizable macromers such as those described in U.S. Pat. No. 4,554,324 (Husman et al.).

Other additives can be included in the pre-adhesive composition, or added at the time of hot melt coating to change the properties of the adhesive. Such additives, or fillers, include plasticizers, pigments, glass or polymeric bubbles

or beads (which may be expanded or unexpanded), fibers, reinforcing agents, hydrophobic or hydrophilic silica, calcium carbonate, toughening agents, fire retardants, antioxidants, finely ground polymeric particles such as polyester, nylon, and polypropylene, and stabilizers. The additives are added in amounts sufficient to obtain the desired end properties.

To obtain the adhesive composition for use with this invention, the pre-adhesive composition is polymerized. Polymerization may be effected by exposure of the pre-adhesive composition to heat and/or actinic radiation. Exposure to heat may be effected by thermal radiation, e.g. infrared radiation or thermal conduction. Exposure to actinic radiation includes exposure to visible light or ultraviolet light. It will generally be desired that polymerization proceeds upto a conversion of monomers of at least 90%, preferably at least 95%.

Thermal polymerization can be effected by immersing the packaged composition in a heat exchange medium at temperatures between about 40° C and 100° C for a time sufficient to polymerize the composition. The heat exchange medium may be a forced or impinged gas or a liquid such as water, perfluorinated liquids, glycerine, or propylene glycol. The heat necessary for thermal polymerization may also be provided by a metal platen, heated metal rolls, or microwave energy.

The temperature at which the polymerization occurs depends upon the activation temperature of the initiator. For example, polymerization using VAZO™64, a commercially available initiator from DuPont Company can be carried out at about 80° C, while Vazo™52, also available from DuPont Company, can be used at about 70 °C. It is preferable to carry out the polymerization in an appropriate liquid heat exchange medium at a controlled temperature. A suitable liquid heat exchange medium is water, heated to the desired reaction temperature. Commercially available heat transfer fluids may also be used.

Polymerization can also be effected by exposure to ultraviolet (UV) radiation as described in U.S. Pat. No. 4,181,752 (Martens et al.). In a preferred embodiment, the polymerization is carried out with UV black lights having over 60 percent, and preferably over 75 percent of their emission spectra between 280 to 400 nanometers (nm), with an intensity between about 0.1 to about 25 $mW/cm^2$.

During photopolymerization it is desirable to control the temperature by blowing cooling air around the packaged pre-adhesive composition, by running the packaged pre-adhesive composition over a cooled platen, or by immersing the packaged pre-adhesive composition in a water bath or a heat transfer fluid during polymerization. Preferably, the packaged pre-adhesive compositions are immersed in a water bath, with water temperatures between about 5° C and 90° C, preferably below about 30° C. Agitation of the water or fluid helps to avoid hot spots during the reaction.

In a preferred embodiment, after exposing the pre-adhesive composition to heat and/or actinic radiation and allowing polymerization of the pre-adhesive composition to occur, at least a portion of the pre-adhesive solution has been converted to an adhesive which comprises at least one polymer with a weight average molecular weight of at least 50,000. The weight average molecular weight of the polymerized adhesive composition can range from about 50,000 to about 3,000,000, and preferably from about 100,000 to about 1,800,000, and most preferably from about 200,000 to about 1,500,000.

It has further been found that the resulting acrylic polymer of the adhesive composition formed by polymerization of the pre-adhesive composition contains a fairly large amount of triads of units deriving from the vinyl esters of formula (I). Accordingly, it has been found that the vinyl esters of formula (I) are not incorporated completely at random in the acrylic polymer but rather favor forming blocks. Thus, typically the acrylic polymer of the adhesive composition will have a content of triads made up out of only units derived from vinyl esters of formula (I) of at least 10 mole% and often at least 20 mole%. Furthermore, acrylic polymers may be formed wherein the amount of triads of the type AVA, wherein A represents units deriving from the alkyl ester of acrylic or methacrylic ester and V represents units deriving from the vinyl ester of formula (I), is below the detection limit of the analytical technique used to determine the triad sequences.

The adhesive composition obtained from polymerization of the pre-adhesive composition can be used to make adhesive articles by extruding or hot melt coating the adhesive composition on a substrate. Extrusion of the adhesive composition is typically carried out by introducing the adhesive composition and optional packaging material into a vessel in which the adhesive composition and optional packaging material is melted. This molten adhesive composition may then be extruded or hot melt coated on a desired substrate to form the adhesive article, e.g. a pressure sensitive adhesive sheet. The thickness of the adhesive layer formed may vary widely and may depend on the intended application. Typically, the adhesive layer will have a thickness between 0.1μm and 400μm, preferably between 15μm and 150μm For example, as the substrate, a sheet material may be used such as a tape backing or a release liner. Preferably, the polymerized adhesives are hot melt coated by putting the adhesive composition in a hot melt coater at a temperature sufficient to melt the hot melt adhesive composition and with sufficient mixing to form a coatable mixture, which is coated onto a substrate. This step can be done conveniently in a heated extruder, bulk tank melter, melt-on-demand equipment, or a hand-held hot melt adhesive gun. If a crosslinking agent is added, the coated adhesive can then be exposed to sufficient UV radiation or ionizing radiation to effect the crosslinking. Crosslinking is preferably initiated after coating.

The steps may be done in-line, i.e., the pre-adhesive composition may be surrounded by the packaging material, polymerized, hot melt coated to form a tape, and optionally crosslinked, or the steps may be performed individually at separate times and sites. For example, the packaged pre-adhesive composition may be polymerized at one time, and

extruded and crosslinked at another time.

In one embodiment of the invention, a tape is formed in which the substrate is a tape backing. Typical tape backings include cellulosic materials such as paper, crepe paper, and cloth (including both woven and non-woven cloths); films such as biaxially oriented polyester, polyvinyl chloride, polyurethane, biaxially and monoaxially oriented polypropylene, nylon; foam materials such as, polyethylene foams and acrylic foams; and metal foils such as aluminum foil. The backings are usually treated on the back side, i.e. the side opposite to the side carrying the adhesive layer, with a release coating such as silicone, and may be treated prior to hot melt coating to enhance the adhesion of the adhesive to the backing. Treatments useful for enhancing the adhesion of the adhesive to the backing include chemical priming and corona treatment.

In another embodiment of the invention, a transfer tape is formed wherein the substrate is a release liner. The release liner can be coated on one or both sides with a release coating, and the transfer tape is removed from the substrate when used by the end user. Additionally, the adhesive can be coated on one or both sides of a backing to form a double-coated tape. Also, the adhesive may be coated on a temporary substrate and may then in a further manufacturing step be laminated to a final substrate. In yet another embodiment, the substrate is the surface of a part to be bonded to another part with the hot melt adhesive. In another embodiment of the invention, the adhesive or a tape made out of the adhesive is used to damp vibrations or as a sealant.

In a particularly preferred embodiment, the PSA according to the invention is provided on an electronic cutter film suitable for making image graphics and/or lettering. Electronic cutter films are used to produce image graphics and/or lettering through the use of a computer driven cutting means such as a knife or stylus over the surface of the electronic cutter film Thus, electronic data representing a desired character, lettering or image is used by a software program running on a computer to cut out the desired character, lettering or image from the cutter film by steering the cutting means in accordance with the electronic data. Commercially available electronic cutting equipment include Gerber Scientific Products of Manchester, Connecticut and Zünd Systemtechnik AG, Altstatten Switzerland.

In one embodiment, the cutter film may be a polyvinyl chloride film provided with the PSA according to this invention. The PSA will generally be protected with a release liner. Such release liner will typically be removed when the desired graphic or lettering is to be applied to a surface. The film may be colored or not and/or may be transparent including translucent or opaque.

In another embodiment, the electronic cutter film may be a multi-layer film as disclosed in WO 98/55296 whereby the adhesive layer of the multi-layer film disclosed in this publication is a PSA according to the invention. The multi-layer film of this publication comprises a core layer with on one side an abrasion resistant layer and on the opposing side an adhesive priming layer and a PSA provided on the adhesive priming layer. The core layer is typically a polyolefin film such as polyethylene, polypropylene and copolymers of ethylene and propylene. The abrasion resistant layer includes an abrasion resistant polymer such as for example ethylene methyl acrylate ionomeric resins such as Surlyn™ ionomer available from Dupont de Nemours. Suitable adhesive priming layers include copolymers of ethylene and a polar comonomer. A particular example includes copolymers of ethylenen and vinylacetate, such as ELVAX™ available from Dupont de Nemours.

In connection with the present invention, the acrylic adhesive composition can be used to adhere an object to a low surface energy substrate. Such low surface energy substrates are substrates that have a surface tension of not more than 40 mN/m, preferably not more than 35mN/m. Examples of such substrates include polyolefins such as polyethylene and polypropylene. According to a particular interesting embodiment, the low surface energy substrate is a substrate that is selected from a painted metal or plastic substrate. By the term "painted" is meant that the substrate is provided with a decorative coating, e.g. a color coating, a coating providing gloss or matting etc... For example, the painted substrate may be a painted metal or painted plastic part of a motor vehicle such as a train, an airplane, a car, a truck, a bus or a metro.

The following examples are intended to further illustrate the invention without however the intention to limit the invention thereto.

## EXAMPLES

### Test Methods

#### Gel Content, %

Sections of packaged adhesive were weighed and the calculated weight of the packaging film was subtracted to determine the net weight of the adhesive polymer (W1). The packaged adhesive was then cut into several pieces and placed in a glass bottle with wide opening containing 160g tetrahydrofuran (THF). The bottle was agitated for 2 days. The resulting polymer solution was filtered through a pre-weighed silk screen (W2) and dried in a forced air oven for 48 h at 105 ° C. The silk screen bearing the dried, THF-insoluble gel particles and the packaging film were weighed and

then the calculated weight of the packaging film was subtracted to give the weight of the dry gel particles and the screen (W3).

The gel content in percent was calculated by:

$$\text{gel content in \%} = ((W3 - W2) / W1) * 100.$$

Determination of Monomer Sequence Triads

Monomer sequence triads were determined by standard C-13 nuclear magnetic resonance ($C^{13}$ NMR) techniques employing a 300 MHz instrument. NMR was employed to determine specifically whether any given vinyl ester monomer unit was flanked on each side by an acrylate group (designated as an AVA triad), on one side by an acrylate group and on the other side by another vinyl ester monomer (designated as a AVV triad) or on both sides by vinyl ester monomers (designated as a VVV triad). The $C^{13}$ resonance of the backbone CH from a given vinyl ester varies as a function of the nature of its neighbours. A chemical shift from 73 to 70 ppm was employed for an AVA triad, a chemical shift of 70 to 68 ppm for an AVV triad and a chemical shift of 68 to 65.6 ppm for a VVV triad. The triad content results are present in mole fraction.

180° Peel adhesion

One of the protective liners of a strip of pressure sensitive adhesive transfer tape measuring 12.7 cm by 2.54 cm was removed. The exposed pressure-sensitive adhesive was then laminated to the aluminum side of an aluminized polyester film (thickness of 25 μm, available as ID-Nr. 7KF002R0250.023.001 from Tricon Veredelungs GmbH, Freiburg, Germany) by passing a rubber roller over the sample. The second protective liner was then removed and the adhesive surface of the tape was adhered to a 12 cm by 5 cm test surface panel that had been cleaned with isopropanol and a 50:50 mixture of isopropanol and water, respectively. The laminated adhesive film was rolled down with two pass of a 2.05 kg hard rubber roller. The test specimen prepared in this manner was conditioned at 21° C for 20 minutes, 24 hours or 3 days, respectively.

The test specimens were then mounted on a peel tester such that the tape is peeled away from the substrate in question at a 180° angle at a peel speed of 300 mm per minute according to the general procedure described in PSTC-1 (Pressure-Sensitive Tape Council, Chicago, ILL/USA) The results were reported in Newtons per centimeter (N/cm). The values are an average of three tests.

90° Peel Adhesion

90° Peel adhesion test were performed by the general method described in PSTC-2 (Pressure-Sensitive Tape Council, Chicago, ILL/USA).

METHOD A. Employed for acrylic foam with thin PSA on one side

An anodized aluminium sheet having a thickness of 0.135 mm (available from Lawrence & Frederick Inc., Streamwood, Illinois) was used as a backing for tape specimens comprising a thick acrylic foams laminated to thinner layers of pressure sensitive. The other liner is then removed and the tape is adhered to a 12 cm by 5 cm test surface panel that had been cleaned with isopropanol and a 50:50 mixture of isopropanol and water, respectively. The laminated adhesive film is rolled down with two pass of a 2.05 kg hard rubber roller. The panel is conditioned at room temperature (about 21°C) for about 20 minutes, 24 hours or 3 days, respectively and then mounted on a peel tester such that the tape is pulled off at a 90° angle at a speed of 30 cm per minute. The results are reported in the tables in Newtons per centimeter (N/cm). The values are an average of three tests.

METHOD B. Employed for transfer tapes and double-coated tapes

One of the protective liners was removed from a strip of pressure-sensitive adhesive transfer tape measuring 12.7 cm by 2.54 cm, The exposed pressure-sensitive adhesive was laminated to the aluminum side of an aluminized polyester film (thickness of 25 μm, available as ID-Nr. 7KF002R0250.023.001 from Tricon Veredelungs GmbH, Freiburg, Germany) by passing a rubber roller over the sample. The second protective liner was then removed and the adhesive surface of the tape was adhered to a 12 cm by 5 cm test surface panel that had been cleaned with isopropanol and a 50:50 mixture of isopropanol and water, respectively. The laminated adhesive film was rolled down with two pass of a

2.05 kg hard rubber roller. The test specimen was conditioned at 21°C for 20 minutes, 24 hours or 3 days, respectively.

The test specimens were then mounted on a peel tester such that the tape is pulled off at a 90° angle at a peel speed of 300 mm per minute. The results were reported in Newtons per centimeter (N/cm). The values are an average of three tests.

Static Shear (23°C)

Static Shear Testing in general was performed according to the method described in PSTC-7 (Pressure-sensitive Tape Council, Chicago, ILL/USA). The pressure-sensitive adhesive transfer tape was laminated to a 0.025 mm thick piece of aluminized polyester and cut to a dimension of 12.7 cm by 1.27 cm One end of the sample was adhered to a stainless steel panel or a powder clear coat panel, respectively, previously cleaned as described above. The adhered area was 2.54 cm x 1.27 cm. A weight of 1000 g was attached to the other end of the sample after 20 min conditioning at 23°C. The panel was then hung at about 2° tilt from the vertical, to assure a shear mode failure, and the time in which the sample pulls away from the panel was measured in minutes (min). The test was discontinued after 10,000 minutes. The reported values represent the average of three tests.

Static Shear (70°C)

The 23°C static shear test was repeated with the exception that

1) the test temperature was raised to 70°C and
2) the adhesively bonded area between the test tape and the vertical test panel was 2.54 x 2.54 cm.

A 1000 g weight was also employed.

Static Shear (90°C)

This test was employed for acrylic foam tapes. The 23°C static shear test was repeated with the exception that:

1) the test temperature was raised to 90°C,
2) the adhesively bonded area was 0.5 cm x 0.5 cm and
3) the weight employed was 250 g.

Cleaning procedures of the test surfaces:

A. The test panel was wiped clean once with a tissue soaked with iso-propanol and wiped twice with a 1:1 mixture of iso-propanol / water.
B. The stainless steel substrate was cleaned by a) wiping with a tissue saturated with methyl ethyl ketone (MEK), b) wiping with a tissue saturated in diacetone alcohol and finally c) wiping with a tissue saturated with a 1:1 by volume mixture of water and isopropanol.
C. The side of the float glass employed as a substrate was the air side and was cleaned by wiping with a tissue saturated in isopropanol.

Substrates employed for 130° Peel adhesion and Static Shear Tests

| Substrate | Source | Cleaning procedure |
|---|---|---|
| Powder clear coat (PCC) | Enviracryl PCC 10106 from PPG Industries Lacke GmbH, Wuppertal, Germany | A |
| PP | PP Panels natural from Precision Punch & Plastics, Minneapolis, USA | A |
| PE | IKF Schoen, Duesseldorf, Germany | A |
| SS | | B |

(continued)

| Substrate | Source | Cleaning procedure |
|---|---|---|
| float glass | Glas Schreuer, Neuss, Germany | C |
| PP= polypropylene, PE= polyethylene and SS= stainless steel | | |

Materials Employed in the Examples

Vinyl Ester Monomers

VeoVa™ 9 - the vinyl ester of Versatic 9, a synthetic saturated monocarboxylic acid of a highly branched tertiary structure containing eleven carbon atoms. Tg of a homopolymer of VeoVa™ 9 = 70 ° C, available from Resolution Performance Products (Rotterdam, The Netherlands).
VeoVa ™ 10 - the vinyl ester of Versatic 10, a synthetic saturated monocarboxylic acid of a highly branched tertiary structure containing eleven carbon atoms. Tg of a homopolymer of
VeoVa ™ 10 = - 3 ° C, available from Resolution Performance Products (Rotterdam, The Netherlands). Also known as neodecanoic acid.
VeoVa ™ 11 - the vinyl ester of Versatic 11, a synthetic saturated monocarboxylic acid of a highly branched tertiary structure containing eleven carbon atoms. Tg of a homopolymer of VeoVa ™ 11 = - 40° C, available from Resolution Performance Products (Rotterdam, The Netherlands).

Tackifiers

Foral™ 105-E - a highly hydrogenated pentaerythritol (rosin) ester with a softening point of 105 °C available from Eastman Chemical Company (Kingsport, TN/USA).
Foral™ 85-E - a highly hydrogenated glycerol (rosin) ester with a softening point of 85 °C available from Eastman Chemical Company (Kingsport, TN/USA).
Foralyn™ 90 - a hydrogenated glycerol (rosin) ester with a softening point of 89 °C available from Eastman Chemical Company (Kingsport, TN/USA).
Regalite™ R7100 - a partially hydrogenated hydrocarbon resin with a softening point of 102 °C available from Eastman Chemical Company (Kingsport, TN/USA).
Picco HM 100 - a modified aromatic hydrocarbon resin with a softening point of 100 °C available from Eastman Chemical Company (Kingsport, TN/USA).
Wingtack™ Plus - a modified polyterpene hydrocarbon resin with a softening point of 94 °C available from Goodyear Chemical (Arkon, US).
Sylvares TP 2019 - s a terpene phenolic resin with a softening point of 123 °C available from Arizona Chemicals S.A. (Niort Cedex, France).
SP 553 is a terpene phenolic resin with a softening point between 112 and 118 °C availabe from Shenectady.

Crosslinkers

(2,3-di(trichloromethyl)-4-(4methoxyphenyl)-1,3,5-triazine) available as XL-353 from 3M Company, St. Paul, MN/USA:

Chain Transfer Agent

IOTG - isooctyl thioglycolate

Example 1

The two lateral edges of a single sheet of a film comprising an ethylene vinyl acetate polymer having 6 percent vinyl acetate and a thickness of 25 μm (obtainable as VA-24 from Huntsman Packaging Corp.) were heat-sealed together to form a tube. One end of the tube was heat-sealed to form a flattened rectangular pouch measuring 4.5 cm wide. These operations were performed using a liquid form, fill and seal machine.
The tube of polymeric film was then filled with a mixture comprising 30 weight per cent 2-ethyl hexyl acrylate (2-EHA), 30 weight per cent butyl acrylate (BA), 5 weight per cent acrylic acid (AA), 25 weight percent VeoVa 11 (the vinyl ester of a synthetic saturated monocarboxylic acid of a highly branched tertiary structure containing eleven carbon

atoms, $T_g$ of homopolymer =-40° C, available from Resolution Performance Products (Rotterdam, The Netherlands)) and 10 weight per cent VeoVA 10 (vinyl ester of a synthetic saturated monocarboxylic acid of a highly branched tertiary structure containing eleven carbon atoms. $T_g$ of homopolymer = - 3° C, available from Resolution Performance Products (Rotterdam, The Netherlands)) and a photoinitiator, Irgacure™ 184 (1-hydroxy-cyclohexyl-phenyl-ketone) available from Ciba Specialty Chemicals, Basel, Switzerland) in the amount 0.2 weight percent based on 100 parts of the monomer mixture, corresponding to 0.2 pph.

The filled pouch was then sealed at the top in the cross direction through the monomer to form individual pouches measuring 4.5 cm wide, 10 cm long and about 5 mm thick in the center.

Each pouch contained ca. 20g monomer mixture. The weight ratio of EVA film to acrylate-vinyl ester copolymer was ca. 0.8 / 20. Thus the final adhesive composition was about 4 % by weight ethylene-vinyl acetate copolymer originating from the pouch packaging material.

The strips of pouches were placed in a water bath that was maintained at about 20° C and exposed to ultraviolet radiation at an intensity of 23.5 $mW/cm^2$ for 980 seconds. The radiation was supplied from lamps having about 90 % of the emissions between 300 nm and 400 nm, and a peak emission at 351 nm.

The adhesive thus prepared was subjected to the gel content test described above under Test Methods. No gel could be measured by the method employed.

The pouches were then fed into a co-rotating twin screw extruder (L:D = 46) from Werner-Pfleiderer Model ZSK 25 (Stuttgart, Germany). The extruder had nine ports and 11 temperature zones. The compounding screw had four kneading sections in the second, fourth, sixth and eighth barrel segments. First kneading section consists of right-handed kneading elements. All other kneading elements consists of left-handed kneading elements. The temperature profile in the extruder is between 120° C in the first segment and 180° C at the die.

Residual monomers and/or other low molecular weight volatile components of the pressure-sensitive adhesive material were reduced by means of a degassing station at the ninth barrel segment.

The twin screw extruder was connected to a gear pump which fed the melted adhesive material to a rotary rod die for coating onto a silicone-coated paper release liner. The extruded pressure-sensitive adhesive film had a thickness of ca. 50 μm.

The resulting layer of pressure-sensitive adhesive was cross-linked by exposure to electron beam radiation. The dosage was set to 6 MRad at 175 kV acceleration voltage.

Adhesive properties were evaluated using the 180° peel adhesion test from various surfaces including low surface energy materials (automotive paints comprising a powder clear coat, polypropylene, polyethylene) as well as standard substrates including stainless steel and glass. Static shear tests were also performed at both 23 ° C and 70 ° C. Shear values were measured from both stainless steel and powder clear-coat paint surfaces.

The gel content of the adhesive was also measured according to the method described above under Test Methods.

The adhesive composition of Example 1 was evaluated at each of five progressive points during the polymerization process (labelled T1-T5 in Table 3) using carbon-13 nuclear magnetic resonance ($C^{13}$ NMR). Samples were taken at regular intervals during the polymerization in subsequent UV polymerization zones and quenched by exposure to oxygen. NMR was then employed to determine what fraction of any given vinyl ester monomer unit in the polymer was flanked on each side by an acrylate group (AVA triad), on one side by an acrylate group and on the other side by another vinyl ester monomer (AVV triad) or on both sides by vinyl ester monomers (VVV triad). Results are summarized in Table 3.

<u>Examples 2-7</u>

Example 1 was repeated with the exception that the monomer composition of the polymerization mixture was altered as reflected in Table 1.

The monomer triad frequencies were determined via NMR for the adhesives of Examples 2 and 3. Results are summarized in Table 3.

<u>Examples 8-13</u>

Example 1 was repeated with the exception that the monomer compositions were altered to included vinyl acetate (VA) and N, N-dimethylacrylamide (DMA). The temperature profile of the extruder was also altered in comparison to Example 1. The first temperature zone was set at 120° C and the temperature at the die reached 140° C.

Adhesive compositions are summarized in Table 1 and test results are shown in Table 2.

Comparative Examples 1-3

Comparative Examples 1-3 were prepared in substantially the same manner as Examples 1, 2 and 3, respectively, with the exception that the vinyl esters of versatic acid were replaced with an equivalent weight of vinyl acetate. The chemical compositions are summarized in Table 1.

The polymers prepared were difficult to hot-melt coat and coatings having a thickness of 100 μm could not be achieved via extrusion. The films were substantially inferior to the adhesive of Examples 1-13 and had very low tack. Thus the adhesive properties were not measured quantitatively.

Table 1

| Ex. | 2-EHA | BA | AA | DMA | VA | VeoVa 9 | VeoVa 10 | VeoVa 11 |
|---|---|---|---|---|---|---|---|---|
| 1 | 30 | 30 | 5 | -- | -- | -- | 10 | 25 |
| C1 | 30 | 30 | 5 | -- | 35 | -- | -- | -- |
| 2 | 45 | 30 | 5 | -- | -- | 20 | -- | -- |
| C2 | 45 | 30 | 5 | -- | 20 | -- | -- | -- |
| 3 | 20 | 20 | 5 | -- | -- | 10 | -- | 45 |
| C3 | 20 | 20 | 5 | -- | 55 | -- | -- | -- |
| 4 | 75 | -- | 5 | -- | -- | 20 | -- | -- |
| 5 | 40 | -- | 5 | -- | -- | 10 | -- | 45 |
| 6 | 42 | 30 | 8 | -- | -- | 20 | -- | -- |
| 7 | 47 | 30 | 3 | -- | -- | 20 | -- | -- |
| 8 | 33 | 30 | -- | 2 | -- | -- | 10 | 25 |
| 9 | 32 | 29 | -- | 5 | -- | -- | 10 | 24 |
| 10 | 31 | 28 | -- | 8 | -- | -- | 9 | 24 |
| 11 | 33 | 30 | -- | -- | 2 | -- | 10 | 25 |
| 12 | 32 | 29 | -- | -- | 5 | -- | 10 | 24 |
| 13 | 27 | 30 | -- | -- | 8 | -- | 10 | 25 |

Table 2

| Ex. | Gel, % | 180° Peel Adhesion, N/cm | | | | | Static shear, min | | | |
|---|---|---|---|---|---|---|---|---|---|---|
| | | PCC | PP | PE | SS | glass | Paint, 23° C | Paint, 70° C | SS, 23° C | SS, 70° C |
| 1 | 0.0 | 5.2 | 4.14 | 1.84 | 4.72 | 6.44 | $>10^4$ | $>10^4$ | $>10^4$ | $>10^4$ |
| 2 | 0.0 | 3.93 | 3.12 | 6.38 | 5.02 | 5.59 | $>10^4$ | $>10^4$ | $>10^4$ | $>10^4$ |
| 3 | 0.0 | 5.05 | 4.17 | 6.56 | 6.21 | 7.47 | $>10^4$ | $>10^4$ | $>10^4$ | $>10^4$ |
| 4 | 0.0 | 4.57 | 4.12 | 1.12 | 6.17 | 7.06 | $>10^4$ | $>10^4$ | $>10^4$ | $>10^4$ |
| 5 | 0.0 | 4.96 | 4.55 | 1.32* | 5.50 | 6.04 | $>10^4$ | $>10^4$ | $>10^4$ | $>10^4$ |
| 6 | 0.0 | 4.82 | 2.79 | 0.97 | 5.08 | 6.16 | -- | -- | 4744 | -- |
| 7 | 0.0 | 4.47 | 2.56 | 1.38 | 4.40 | 5.07 | -- | -- | | -- |
| 8 | 0.0 | 3.24 | 3.48 | 1.34 | 3.38 | 3.31 | -- | -- | 51 | -- |
| 9 | 0.0 | 3.84 | 3.09 | 1.53 | 3.54 | 3.35 | -- | -- | 105 | -- |
| 10 | 0.0 | 4.20 | 3.46 | 1.86 | 4.33 | 4.05 | -- | -- | 133 | -- |
| 11 | 0.0 | 2.60 | 3.84 | 1.32 | 2.90 | 2.21 | -- | -- | 44 | -- |

(continued)

| Ex. | Gel, % | 180° Peel Adhesion, N/cm | | | | | Static shear, min | | | |
|---|---|---|---|---|---|---|---|---|---|---|
| | | PCC | PP | PE | SS | glass | Paint, 23° C | Paint, 70° C | SS, 23° C | SS, 70° C |
| 12 | 0.0 | 2.88 | 5.62 | 1.72 | 2.80 | 2.86 | -- | -- | 181 | -- |
| 13 | 0.0 | 3.50 | 9.50 | 2.17 | 4.05 | 3.31 | -- | -- | 204 | -- |
| * = shocky peel behavior<br>n.m = not measured | | | | | | | | | | |

Table 3

| Example | Time during polym. | AVA triad, mole fraction | AVV triad, mole fraction | VVV triad, mole fraction | Vinyl ester conv., % | Acrylate ester conv., % | Acrylic acid conv., % |
|---|---|---|---|---|---|---|---|
| 1 | T1 | * | * | * | 31 | 86 | 90 |
| | T2 | * | 0.79 | 0.21 | 53 | 99 | 100 |
| | T3 | * | 0.47 | 0.53 | 77 | 100 | 100 |
| | T4 | * | 0.38 | 0.62 | 95 | 100 | 100 |
| | T5 | * | 0.40 | 0.60 | 98 | 100 | 100 |
| | | | | | | | |
| 2 | T1 | * | 0.78 | 0.22 | 41 | 90 | 80 |
| | T2 | * | 0.71 | 0.29 | 55 | 99 | 100 |
| | T3 | * | 0.65 | 0.35 | 85 | 100 | 100 |
| | T4 | * | 0.61 | 0.39 | 91 | 100 | 100 |
| | T5 | * | 0.59 | 0.41 | 93 | 100 | 100 |
| | | | | | | | |
| 3 | T1 | * | 0.75 | 0.25 | 27 | 84 | 70 |
| | T2 | * | 0.73 | 0.27 | 46 | 98 | 100 |
| | T3 | * | 0.40 | 0.60 | 84 | 100 | 100 |
| | T4 | * | 0.31 | 0.69 | 95 | 100 | 100 |
| | T5 | * | 0.32 | 0.68 | 97 | 100 | 100 |
| * below the detection limit of the method employed | | | | | | | |

Table 3 shows that the adhesive copolymers proceed to near complete polymerization during the photopolymerization conditions employed. Table 3 also shows that, in the adhesive composition of Examples 1 and 3, the acrylate monomers are consumed preferentially in the beginning of the polymerization and that sequences of pure vinyl ester appear more frequently towards the end of the polymerization. The composition of adhesive Example 2 showed lesser tendency to produce pure vinyl ester sequences late in the polymerization, as compared to Examples 1 and 3.

<u>Comparative Examples 4-6</u>

Comparative Example 4 was prepared by the method of Example 1 with the exception that no vinyl ester monomer was present. The vinyl ester monomer(s) was replaced by an equivalent weight of 2-ethyl hexyl acrylate (2-EHA). Butyl acrylate was also replaced by 2-EHA. The same initiator as in Example 1 was used to induce the polymerization at polymerization temperatures and initiator levels as reflected in Table 4.

Comparative Examples 7 and 8

Comparative Examples 7 and 8 were also prepared by the method of Example 1 with no vinyl ester monomer. The same initiator as in Example 1 was used to induce the polymerization at polymerization temperatures and initiator levels as reflected in Table 4.

Comparative Example 9

Comparative Example 9 was prepared in substantially the same manner as Example 1 with the exception that the monomers comprised 90 % by weight isooctyl acrylate (IOA) and 10 % by weight acrylic acid (AA). The composition of Comparative Example 9 contains a chain transfer agent, isooctyl thioglycolate (IOTG) to reduce the molecular weight of the polymer produced.

A layer of pressure-sensitive adhesive was extruded and tested for its adhesive behavior. Adhesive test results are summarized in Table 5.

Table 4

| Comp. Ex. | 2-EHA, wt % | IOA, wt. % | AA, wt. % | initiator, amount | Polymeriz. temp., °C | Gel, % |
|---|---|---|---|---|---|---|
| C4 | 95 | | 5 | IRGACURE 651, 0.30 pph | 35 | 22.0 |
| C5 | 95 | | 5 | IRGACURE 651, 0.20 pph | 15 | 10.4 |
| C6 | 95 | | 5 | IRGACURE 651, 0.05 pph | 35 | 18.8 |
| C7 | 95 | | 5 | IRGACURE 184, 0.20 pph | 15 | 5.6 |
| C8 | 92 | | 8 | IRGACURE 184, 0.20 pph | 15 | 17.2 |
| C9 | | 90 | 10 | IRGACURE 651, 0.15 pph IOTG, 0.03 pph | 15 | 4.9 |

Table 5

| Ex | Gel, % | 180° Peel adhesion, N/cm | | | | | Static shear, min | | | |
|---|---|---|---|---|---|---|---|---|---|---|
| | | PCC | PP | PE | SS | glass | Paint, 23°C | Paint, 70° C | SS, 23° C | SS, 70° C |
| C7 | 5.6 | 3.33 | 2.97 | 2.65 | 4.05 | 3.96 | >$10^4$ | >$10^4$ | >$10^4$ | >$10^4$ |
| C9 | 4.9 | 4.65 | 0.41 * | 1.72 | 6.67 | 8.20 | >$10^4$ | >$10^4$ | >$10^4$ | >$10^4$ |

Example 14-20

The adhesive compositions prepared in Examples 1 and 2, respectively, were mixed with tackifier (Foral™ 105E, a hydrogenated rosin ester available from Eastman Chemical Company, Kingsport, TN/USA) during the extrusion process and extruded into a pressure-sensitive adhesive film.

The extrusion process was the same as in Example 1 with the exception that the tackifier was pumped into the extruder at one location (in the third port) or divided into two portions and pumped into ports 3 and 5.

Each of the extruded adhesive films was subjected to e-beam radiation at each of three differing dosages: 6 MRad, 8 MRad and 10 MRad, respectively.

Table 6

| Ex. | Copolymer, 100 parts | Tackifier type | Tackifier amount, parts | E-beam dosage, MRad |
|---|---|---|---|---|
| 14 | Ex. 1 | Foral 105 | 40 | 10 |

(continued)

| Ex. | Copolymer, 100 parts | Tackifier type | Tackifier amount, parts | E-beam dosage, MRad |
|---|---|---|---|---|
| 15 | Ex. 1 | Foral 105 | 10 + 30 | 10 |
| 16 | Ex. 2 | Foral 105 | 30 | 6 |
| 17 | Ex. 2 | Foral 105 | 30 | 8 |
| 18 | Ex. 2 | Foral 105 | 30 | 10 |
| 19 | Ex. 2 | Foral 105 | 10+20 | 10 |
| 20 | Ex. 2 | Foral 105 | 15+15 | 10 |

Table 7

| Example | 180° Peel adhesion (PCC), N/cm | Static Shear, 70°C (paint), min. |
|---|---|---|
| 14 | 7.28 | 199 |
| 15 | 8.35 | 301 |
| 16 | 7.72 | 1029 |
| 17 | 7.28 | 1914 |
| 18 | 5.91 | >10,000 |
| 19 | 6.81 | > 10,000 |
| 20 | 7.08 | >10,000 |

Examples 21-33

Additional examples were prepared by taking the pressure-sensitive adhesive copolymers of Example 1 or 2, respectively, and mixing them with other tackifiers. The copolymer was taken in the amount of 100 parts and the tackifiers were added in the amounts given in Table 8.

The extruded adhesive layers were cross-linked with electron beam radiation and tested for their adhesive behavior. Test results are summarized in Table 9.

Table 8

| Example | Copolymer | Tackifier tradename | Tackifier, parts | E-beam radiation |
|---|---|---|---|---|
| 21 | Ex. 1 | Foralyn 90 | 20 | 8 |
| 22 | 1 | Foralyn 90 | 30 | 10 |
| 23 | 1 | Foral 85E | 40 | 10 |
| 24 | 1 | Regalite R 7100 | 20 | 10 |
| 25 | 1 | Picco HM100 | 20 | 10 |
| 26 | 1 | Picco HM100 | 40 | 10 |
| 27 | 1 | Wingtack + | 20 | 8 |
| 28 | 1 | Sylvarez 2019 | 20 | 10 |
| 29 | 1 | Sylvarez 2019 | 30 | 10 |
| 30 | 1 | Shenectacy SP553 | 20 | 10 |
| 31 | 1 | Shenectacy SP553 | 40 | 10 |
| 32 | 2 | Foralyn 90 | 30 | 10 |
| 33 | 2 | Sylvarez 2019 | 30 | 10 |

Table 9

| Example | 180° peel adhesion , N/cm | Static shear 70°C, min |
|---|---|---|
| 21 | 6.14 | > 10,000 |
| 22 | 6.90 | 474 |
| 23 | 6.55 | 95 |
| 24 | 5.82 | > 10,000 |
| 25 | 6.85 | > 10,000 |
| 26 | 7.80 | 180 |
| 27 | 5.60 | > 10,000 |
| 28 | 6.61 | > 10,000 |
| 29 | 7.28 | 6820 |
| 30 | 5.90 | > 10,000 |
| 31 | 8.35 | 974 |
| 32 | 6.14 | > 10,000 |
| 33 | 5.55 | > 10,000 |

Example 34-35

Example 1 was repeated up through the adhesive polymerization step. The pouches containing polymerized adhesive were then fed into an extruder and a UV cross-linker (benzophenone) was added in the amount of 0.15 parts per hundred part of polymer/pouch and mixed with the polymer. The benzophenone was first dissolved in THF at 25% solids and then fed into the extruder with a pump. The THF and any volatile residual monomers were removed through a vacuum port.

The resulting pressure-sensitive adhesive was extruded into films having a thickness of ca. 50 $\mu$m and 125 $\mu$m, respectively, and was then cross-linked using UV radiation emitted from high intensity UV lamps. The amount of UV radiation was 400 mJ/cm$^2$.

Example 36-37

Example 2 was also repeated with the exception that UV crosslinker (benzophenone) was added during extrusion as in Examples 34-35. Crosslinking of the adhesive films was also effected as in Examples 34-35. The resulting pressure sensitive adhesive films of Examples 36 and 37 had a thickness of 50 and 100 $\mu$m, respectively.

Example 38

Example 3 was also repeated with the exception that UV crosslinker (benzophenone) was added during extrusion as in Examples 34-35. Crosslinking of the adhesive film was also effected with UV radiation as in Example 34-35. The resulting pressure sensitive adhesive film of Example 38 had a thickness of 50 $\mu$m

Table 10

| Example | Adhesive thickness, $\mu$m | Static shear (PCC) 70° C, min |
|---|---|---|
| 34 | 50 | > 10,000 |
| 35 | 125 | 2,546 |
| 36 | 50 | > 10,000 |
| 37 | 100 | > 10,000 |
| 38 | 50 | 5,200 |

Examples 39-40

Example 1 was repeated up through the polymerization step. The packaged adhesive pouches thus generated were then fed into an extruder as in Example 1. A UV cross-linker (2,3-di(trichloromethyl)-4-(4methoxyphenyl)-1,3,5-triazine) available as XL-353 from 3M) was added in the amount of 0.3 and 0.7 parts per hundred parts of packaged adhesive, respectively. The UV cross-linker XL 353 was dissolved in tetrahydrofuran (THF) with a solid content of 25 % by weight. This solution was fed by using a ERC 64.00 HPLC pump from ERC, Regensburg (Germany).
The resulting pressure-sensitive adhesive film having a thickness of ca. 50 μm was then cross-linked using UV radiation emitted from high intensity UV lamps. The amount of UV radiation was 400 mJ/cm$^2$.

Example 41-42

Example 2 was repeated with the exception that UV crosslinker (triazine) was added during extrusion as in Examples 39-40. Crosslinking of the adhesive films was also effected as in Example 39-40. The resulting pressure sensitive adhesive films had a thickness of 50 μm

Table 11

| Example | Copolymer, 100 parts by wt. | Tackifier, parts by wt. | Crosslinker |
|---|---|---|---|
| 39 | Ex. 1 | 40 pph F 105E | 0.3 pph XL353 |
| 40 | Ex.1 | 40pphF105E | 0.7 pph XL 353 |
| 41 | Ex. 2 | 40 pph F 105E | 0.5 pph XL353 |
| 42 | Ex. 2 | 30 pph F 105E | 0.7 pph XL353 |

Table 12

| Example | 180° peel (N/cm) | Static Shear (70° C), min |
|---|---|---|
| 39 | 8.07 | 202 |
| 40 | 6.70 | >10, 000 |
| 41 | 6.93 | 300 |
| 42 | 6.18 | >10,000 |

Example 43

The adhesive composition prepared in Example 1 (100 parts by weight) was mixed with 40 parts by weight of a hydrogenated rosin ester tackifier (available as Foral 105E from Eastman Chemical Company) during the extrusion process. The screw speed was increased to 500 rpm and the amount of tackifier was divided into two portions and fed into the twin screw extruder at two different locations (10 pph into port 2 and 30 pph into port 3).
The extruded pressure-sensitive adhesive film, supported on a siliconized paper release liner, had a thickness of 35 μm and was e-beam cured directly after extrusion with an acceleration voltage of 175 kV and a dosage of 6 MRad. The resulting pressure-sensitive adhesive transfer tape (a single thin layer of pressure-sensitive adhesive) was laminated to the rear surface of a retroreflective sheet.

Example 44

A thick layer of acrylic pressure-sensitive adhesive foam was prepared by on-web UV polymerization substantially as described in US 4, 181,752 (Martens et al). The acrylic foam was a copolymer of isooctyl acrylate (IOA) and acyrlic acid (AA) at a weight ratio of 92.5 to /7.5. Hexanediol diacrylate (HDDA) was employed as a cross-linker at a level of 0.12 parts by weight based on 100 parts of acrylic monomers. Additionally, 4 pph hollow glass bubbles having a diameter of less than 115 μm, 6 pph hydrophobic fumed silica (available as Aerosil R972 from Degussa) and 0.3 pph carbon black were present during the on-web polymerization. The acrylic foam pressure-sensitive adhesive layer had a thickness of ca. 840 μm.
A 15 μm polyamide based primer was laminated to one side of the acrylic foam. The pressure-sensitive adhesive

transfer tape of Example 15 was then laminated to the primer layer to give a two layer pressure-sensitive adhesive tape.

<u>Example 45</u>

Example 43 was repeated with the exception that the thin adhesive film of Example 25 was laminated to the acrylic foam pressure-sensitive adhesive layer to produce a two-layer adhesive tape.

<u>Example 46</u>

The adhesive transfer tape of Example 1 was laminated to both sides of a 12 μm polyester film a double-coated adhesive tape having a thickness of ca. 125 μm E-beam conditions were 5.5 MRad at 175 kV acceleration voltage for each adhesive layer.

<u>Example 47</u>

Example 15 was used to laminate on both sides of a 12 μm polyester film to make a double-coated adhesive tape with the exception that the e-beam curing conditions were changed to 6 MRad at 175 kV.

Table 13

| Ex. | Thickness , μm | Static shear, min | | 90° Peel adhesion, N/cm | | | | |
|---|---|---|---|---|---|---|---|---|
| | | SS, 23°C | PCC, 70°C | PP | PE | PC | glass | ss |
| 46 | 125 | >10,000 | > 10,000 | 2.75 | 6.95 | 6.25 | 7.08 | 5.64 |
| 47 | 125 | 1,576 | 12 | 3.42 sh | 9.51 | 8.82 | 9.69 | 8.53 |
| sh = shocky peel behavior | | | | | | | | |

**Claims**

1. Use of a hot melt acrylic pressure sensitive adhesive for adhering an object to a low surface energy substrate having a surface tension of not more than 40 mN/m, said hot melt acrylic pressure sensitive adhesive comprising an acrylic polymer having units derived from one or more $C_1$-$C_{20}$'alkyl esters of acrylic or methacrylic acid and units derived from one or more vinyl esters corresponding to the formula:

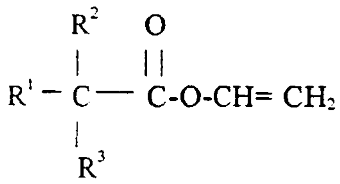

(I)

wherein $R^1$, $R^2$ and $R^3$ each independently represent an alkyl group and the total number of carbon atoms in the vinyl ester is from 7 to 18.

2. Use according to claim 1 wherein at least one of $R^1$, $R^2$ and $R^3$ represents a methyl group.

3. Use according to claim 1 wherein said low surface energy substrate is selected from the group consisting of a polyolefin substrate, a painted metal substrate or a painted plastic substrate.

4. Use according to claim 1 wherein said object comprises a sheet material.

5. Use according to claim 1 wherein the amount of units derived from said $C_1$-$C_{20}$ alkyl esters of acrylic or methacrylic acid is between 30 and 90% by weight and the amount of said vinyl esters of formula (I) is between 10 and 70% by

weight.

**6.** Use according to claim 4 wherein said acrylic polymer further comprises units derived from acrylic and/or methacrylic acid in an amount of 0.5 to 10% by weight and optionally between 0 and 20% by weight of further comonomers.

**7.** Use according to claim 1 wherein the acrylic copolymer comprises at least 10% by mole of triads solely formed by units derived from said vinyl esters.

**8.** Use according to any of the previous claims wherein a layer of said hot melt pressure sensitive adhesive is applied to said object or to said low surface energy substrate and said object is adhered to said low surface energy substrate by application of pressure.

**9.** Adhesive composition for application to a substrate by melt extruding the adhesive composition on said substrate, said adhesive composition being substantially free of organic solvent or water, said adhesive composition comprising an acrylic polymer having between 0.5 and 10% by weight of units derived from acrylic and/or methacrylic acid, between 10 and 70% by weight of units derived from one or more vinyl esters according to formula (I) defined in claim 1, between 30 and 90% by weight of units derived from one or more $C_1$-$C_{20}$ alkyl esters of acrylic or methacrylic acid and between 0 and 20% by weight of units derived from optional further comonomers.

**10.** Adhesive composition according to claim 9 wherein said adhesive composition is combined with a packaging material.

**11.** Adhesive composition according to claim 9 wherein said adhesive composition is packaged in a packaging material that can be melt extruded and that when melt extruded together with the adhesive composition does not destroy the adhesiveness of the composition.

**12.** Method of making an adhesive article comprising the steps of melt extruding an adhesive composition as defined in any of claims 9 to 11 on a substrate to form a pressure sensitive adhesive layer thereon.

**13.** Method according to claim 12 wherein said method further comprises the step of laminating said pressure sensitive adhesive layer to a further substrate.

**14.** Method according to claim 13 wherein said step of laminating transfers said pressure sensitive adhesive layer to said further substrate.

**15.** Method according to claim 12 wherein said substrate comprises a polyvinyl chloride film or a polyolefin film.

**16.** Method according to claim 13 wherein said further substrate comprise a polyvinyl chloride film or a polyolefin film.

**17.** Method of making an adhesive composition as defined in any of claim 9 to 11 defined in any of claims 9 to 11 comprising the steps of.

(a) providing a pre-adhesive composition that comprises not more than 5% by weight of organic solvent or water, and further (i) a monomer mixture consisting of 0,5 to 10% by weight of acrylic and/or methacrylic acid, between 10 and 70% by weight of one or more vinyl esters according to formula (I) defined in claim 1 between 30 and 90% by weight of one or more $C_1$-$C_{20}$ alkyl esters of acrylic or methacrylic acid and between 0 and 20% by weight of optional further comonomers (ii) optionally one or more free radical initiators and (iii) optionally one or more chain transfer agents.
(b) and polymerizing said pre-adhesive composition by exposing said pre-adhesive composition to heat and/or actinic radiation.

**18.** Method according claim 17 wherein said pre-adhesive composition is combined with a packaging material.

**19.** Method according to claim 18 wherein said packaging material is as defined in claim 11.

**20.** Pre-adhesive composition comprising not more than 5% by weight of organic solvent or water, and further (i) a monomer mixture consisting of 0.5 to 10% by weight of acrylic and/or methacrylic acid between 10 and 70% by weight of one or more vinyl esters according to formula (1) defined above, between 30 and 90% by weight of one or more $C_1$-$C_{20}$ alkyl esters of acrylic or methacrylic acid and between 0 and 10% weight of optional further comonomers, (ii) one or more free radical initiators and optionally one or more chain transfer agents.

**21.** Pre-adhesive composition according to claim 20 wherein said pre-adhesive composition is combined with a packaging material as defined in claim 11.

**Patentansprüche**

**1.** Verwendung eines Heißschmelz-Acrylhaftklebers zum Kleben eines Objekts an ein Substrat mit niedriger Oberflächenenergie mit einer Oberflächenspannung von nicht mehr als 40 mN/m, wobei der Heißschmelz-Acrylhaftkleber ein Acrylpolymer mit Einheiten, die von einem oder mehreren $C_1$ -$C_{20}$-Alkylestern von Acryl- oder Methacrylsäure abgeleitet sind, und Einheiten umfasst, die von einem oder mehreren Vinylestern abgeleitet sind, die der Formel

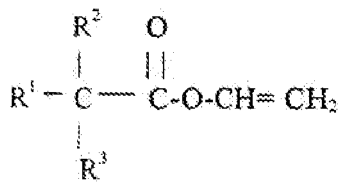

(I)

entsprechen, worin $R^1$, $R^2$ und $R^3$ jeweils unabhängig für eine Alkylgruppe stehen, und die Gesamtzahl der Kohlenstoffatome in dem Vinylester 7 bis 18 beträgt.

**2.** Verwendung nach Anspruch 1, wobei mindestens einer von $R^1$, $R^2$ und $R^3$ für eine Methylgruppe steht.

**3.** Verwendung nach Anspruch 1, wobei das Substrat mit niedriger Oberflächenenergie aus der Gruppe bestehend aus einem Polyolefinsubstrat, einem bemalten Metallsubstrat oder einem bemalten Kunststoffsubstrat ausgewählt ist.

**4.** Verwendung nach Anspruch 1, wobei das Objekt ein Folienmaterial umfasst.

**5.** Verwendung nach Anspruch 1, wobei die Menge der Einheiten, die von den $C_1$-$C_{20}$-Alkylestern von Acryl- oder Methacrylsäure abgeleitet sind, zwischen 30 und 90 Gew.-% liegt, und die Menge der Vinylester der Formel (I) zwischen 10 und 70 Gew.-% liegt.

**6.** Verwendung nach Anspruch 4, wobei das Acrylpolymer ferner Einheiten, die von Acryl- und/oder Methacrylsäure abgeleitet sind, in einer Menge von 0,5 bis 10 Gew.-% und gegebenenfalls zwischen 0 und 20 Gew.-% weitere Comonomere umfasst.

**7.** Verwendung nach Anspruch 1, wobei das Acrylcopolymer mindestens 10 Mol.% Triaden umfasst, die nur aus Einheiten gebildet sind, die von den Vinylestern abgeleitet sind.

**8.** Verwendung nach einem der vorhergehenden Ansprüche, wobei eine Schicht des Heißschmelz-Haftklebers auf das Objekt oder auf das Substrat mit niedriger Oberflächenenergie angewendet wird und das Objekt durch Ausüben von Druck an das Substrat mit niedriger Oberflächenenergie geklebt wird.

**9.** Klebezusammensetzung zur Anwendung an ein Substrat, indem die Klebezusammensetzung auf das Substrat schmelzextrudiert wird, wobei die Klebezusammensetzung im Wesentlichen frei von organischem Lösungsmittel oder Wasser ist, und ein Acrylpolymer mit zwischen 0,5 und 10 Gew.-% Einheiten, die von Acryl- und/oder Methacrylsäure abgeleitet sind, zwischen 10 und 70 Gew.-% Einheiten, die von einem oder mehreren Vinylestern gemäß der in Anspruch 1 definierten Formel (I) abgeleitet sind, zwischen 30 und 90 Gew.-% Einheiten, die von einem oder mehreren $C_1$-$C_{20}$-Alkylestern von Acryl- oder Methacrylsäure abgeleitet sind, und zwischen 0 und 20 Gew.% Einheiten, die von optionalen weiteren Comonomeren abgeleitet sind, umfasst.

**10.** Klebezusammensetzung nach Anspruch 9, wobei die Klebezusammensetzung mit einem Verpackungsmaterial kombiniert ist.

**11.** Klebezusammensetzung nach Anspruch 9, wobei die Klebezusammensetzung in einem Verpackungsmaterial verpackt ist, das schmelzextrudiert werden kann, und das, wenn es zusammen mit der Klebezusammensetzung schmelzextrudiert wird, das Haftvermögen der Zusammensetzung nicht zerstört.

**12.** Verfahren zum Herstellen eines Klebegegenstands, umfassend die Schritte des Schmelzextrudierens einer wie in einem der Ansprüche 9 bis 11 definierten Klebezusammensetzung auf ein Substrat, um darauf eine Haftkleberschicht zu bilden.

**13.** Verfahren nach Anspruch 12, wobei das Verfahren ferner den Schritt des Laminierens der Haftkleberschicht an ein weiteres Substrat umfasst.

**14.** Verfahren nach Anspruch 13, wobei der Laminierungsschritt die Haftkleberschicht auf das weitere Substrat transferiert.

**15.** Verfahren nach Anspruch 12, wobei das Substrat einen Polyvinylchloridfilm oder einen Polyolefinfilm umfasst.

**16.** Verfahren nach Anspruch 13, wobei das weitere Substrat einen Polyvinylchloridfilm oder einen Polyolefinfilm umfasst.

**17.** Verfahren zum Herstellen einer wie in einem der Ansprüche 9 bis 11 definierten Klebezusammensetzung, umfassend die Schritte:

(a) Bereitstellen einer Präklebezusammensetzung, die nicht mehr als 5 Gew.-% organisches Lösungsmittel oder Wasser und ferner (i) eine Monomermischung bestehend aus 0,5 bis 10 Gew.-% Acryl- und/oder Methacrylsäure, zwischen 10 und 70 Gew.-% von einem oder mehreren Vinylestern gemäß der in Anspruch 1 definierten Formel (I), zwischen 30 und 90 Gew.-% von einem oder mehreren $C_1$-$C_{20}$-Alkylestern von Acryl- oder Methacrylsäure und zwischen 0 und 20 Gew.-% von optionalen weiteren Comonomeren, (ii) gegebenenfalls einen oder mehrere Radikalinitiatoren und (iii) gegebenenfalls ein oder mehrere Kettenübertragungsmittel umfasst,
(b) und Polymerisieren der Präklebezusammensetzung, indem die Präklebezusammensetzung Wärme und/oder aktinischer Strahlung ausgesetzt wird.

**18.** Verfahren nach Anspruch 17, wobei die Präklebezusammensetzung mit einem Verpackungsmaterial kombiniert ist.

**19.** Verfahren nach Anspruch 18, wobei das Verpackungsmaterial wie in Anspruch 11 definiert ist.

**20.** Präklebezusammensetzung, die nicht mehr als 5 Gew.-% organisches Lösungsmittel oder Wasser und ferner (i) eine Monomermischung bestehend aus 0,5 bis 10 Gew.-% Acryl- und/oder Methacrylsäure, zwischen 10 und 70 Gew.-% von einem oder mehreren Vinylestern gemäß der in Anspruch 1 definierten Formel (I), zwischen 30 und 90 Gew.-% von einem oder mehreren $C_1$-$C_{20}$-Alkylestern von Acryl- oder Methacrylsäure und zwischen 0 und 20 Gew.-% von optionalen weiteren Comonomeren, (ii) gegebenenfalls einen oder mehrere Radikalinitiatoren und (iii) gegebenenfalls ein oder mehrere Kettenübertragungsmittel umfasst.

**21.** Präklebezusammensetzung nach Anspruch 20, wobei die Präklebezusammensetzung mit einem wie in Anspruch 11 definierten Verpackungsmaterial kombiniert ist.

## Revendications

**1.** Utilisation d'un adhésif acrylique thermofusible sensible à la pression pour coller un objet sur un substrat de faible énergie superficielle ayant une tension superficielle non supérieure à 40 mN/m, ledit adhésif acrylique thermofusible sensible à la pression comprenant un polymère acrylique comportant des motifs dérivés d'un ou plusieurs esters d'alkyle en $C_1$-$C_{20}$ d'acide acrylique ou méthacrylique et des motifs dérivés d'un ou plusieurs esters vinyliques répondant à la formule:

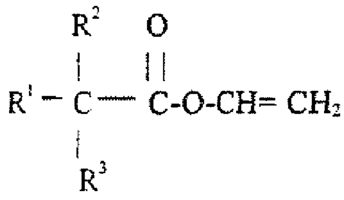

(I)

dans laquelle $R^1$, $R^2$ et $R^3$ représentent chacun indépendamment un groupe alkyle et le nombre total d'atomes de carbone dans l'ester vinylique est de 7 à 18.

2. Utilisation selon la revendication 1, dans laquelle au moins un des symboles $R^1$, $R^2$ et $R^3$ représente un groupe méthyle.

3. Utilisation selon la revendication 1, dans laquelle ledit substrat de faible énergie superficielle est choisi dans le groupe constitué par un substrat en polyoléfine, un substrat en métal peint ou un substrat en plastique peint.

4. Utilisation selon la revendication 1, dans laquelle ledit objet est constitué d'un matériau en feuille.

5. Utilisation selon la revendication 1, dans laquelle la quantité de motifs dérivés desdits esters d'alkyle en $C_1$-$C_{20}$ d'acide acrylique ou méthacrylique est comprise entre 30 et 90 % en poids et la quantité desdits esters vinyliques de formule (I) est comprise entre 10 et 70 % en poids.

6. Utilisation selon la revendication 4, dans laquelle ledit polymère acrylique comprend en outre des motifs dérivés d'acide acrylique et/ou méthacrylique en quantité de 0,5 à 10 % en poids et éventuellement entre 0 et 20 % en poids d'autres comonomères.

7. Utilisation selon la revendication 1, dans laquelle le copolymère acrylique comprend au moins 10 % en moles de triades formées seulement de motifs dérivés desdits esters vinyliques.

8. Utilisation selon l'une quelconque des revendications précédentes, dans laquelle une couche dudit adhésif thermofusible sensible à la pression est appliquée sur ledit objet ou sur ledit substrat de faible énergie superficielle et ledit objet est collé audit substrat de faible énergie superficielle par l'application d'une pression.

9. Composition adhésive à appliquer sur un substrat par extrusion en fusion de la composition adhésive sur ledit substrat, ladite composition adhésive étant pratiquement exempte de solvant organique ou d'eau, ladite composition adhésive comprenant un polymère acrylique comportant entre 0,5 et 10 % en poids de motifs dérivés d'acide acrylique et/ou méthacrylique, entre 10 et 70 % en poids de motifs dérivés d'un ou plusieurs esters vinyliques de formule (I), définie dans la revendication 1, entre 30 et 90 % en poids de motifs dérivés d'un ou plusieurs esters d'alkyle en $C_1$-$C_{20}$ d'acide acrylique ou méthacrylique et entre 0 et 20 % en poids de motifs dérivés d'autres comonomères éventuels.

10. Composition adhésive selon la revendication 9, ladite composition adhésive étant associée avec un matériau d'emballage.

11. Composition adhésive selon la revendication 9, ladite composition adhésive étant emballée dans un matériau d'emballage qui peut être extrudé en fusion et qui, lorsqu'il est extrudé en fusion en même temps que la composition adhésive, ne détruit pas l'adhésivité de la composition.

12. Procédé de fabrication d'un article adhésif, comprenant les étapes consistant à extruder en fusion une composition adhésive telle que définie dans l'une quelconque des revendications 9 à 11 sur un substrat pour former par-dessus une couche d'adhésif sensible à la pression.

13. Procédé selon la revendication 12, ledit procédé comprenant en outre l'étape consistant à stratifier ladite couche d'adhésif sensible à la pression sur un autre substrat.

**14.** Procédé selon la revendication 13, dans lequel ladite étape de stratification transfère ladite couche d'adhésif sensible à la pression sur ledit autre substrat.

**15.** Procédé selon la revendication 12, dans lequel ledit substrat comprend un film de poly(chlorure de vinyle) ou un film de polyoléfine.

**16.** Procédé selon la revendication 13, dans lequel ledit autre substrat comprend un film de poly(chlorure de vinyle) ou un film de polyoléfine.

**17.** Procédé de fabrication d'une composition adhésive telle que définie dans l'une quelconque des revendications 9 à 11, comprenant les étapes consistant à :

(a)se procurer une composition pré-adhésive ne comprenant pas plus de 5% en poids d'un solvant organique ou d'eau et comprenant en outre (i) un mélange de monomères constitué de 0,5 à 10 % en poids d'acide acrylique et/ou méthacrylique, entre 10 et 70 % en poids d'un ou plusieurs esters vinyliques de formule (I), définie dans la revendication 1, entre 30 et 90 % en poids d'un ou plusieurs esters d'alkyle en $C_1$-$C_{20}$ d'acide acrylique ou méthacrylique et entre 0 et 20 % en poids d'autres comonomères éventuels, (ii) éventuellement un ou plusieurs amorceurs de radicaux libres et (iii) éventuellement un ou plusieurs agents de transfert de chaîne ;
(b)et polymériser ladite composition pré-adhésive en exposant ladite composition pré-adhésive à de la chaleur et/ou à un rayonnement actinique.

**18.** Procédé selon la revendication 17, dans lequel ladite composition pré-adhésive est associée à un matériau d'emballage.

**19.** Procédé selon la revendication 18, dans lequel ledit matériau d'emballage est tel que défini dans la revendication 11.

**20.** Composition pré-adhésive ne comprenant pas plus de 5% en poids d'un solvant organique ou d'eau et comprenant en outre (i) un mélange de monomères constitué de 0,5 à 10 % en poids d'acide acrylique et/ou méthacrylique, entre 10 et 70 % en poids d'un ou plusieurs esters vinyliques de formule (I), définie ci-dessus, entre 30 et 90 % en poids d'un ou plusieurs esters d'alkyle en $C_1$-$C_{20}$ d'acide acrylique ou méthacrylique et entre 0 et 20 % en poids d'autres comonomères éventuels, (ii) un ou plusieurs amorceurs de radicaux libres et (iii) éventuellement un ou plusieurs agents de transfert de chaîne.

**21.** Composition pré-adhésive selon la revendication 20 ladite composition pré-adhésive étant associée à un matériau d'emballage tel que défini dans la revendication 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9605248 A
- US 3654213 A
- US 5804610 A
- US 4329384 A, Vesley
- US 4330590 A, Vesley
- US 4737559 A, Kellen
- US 4181752 A, Martens
- US 4554324 A, Husman
- WO 9855296 A